Europäisches Patentamt

European Patent Office

Office européen des brevets

(11) Numéro de publication : **0 055 150 B1**

# (12) FASCICULE DE BREVET EUROPÉEN

(45) Date de publication du fascicule du brevet :
13.06.84

(21) Numéro de dépôt : 81401819.8

(22) Date de dépôt : 19.11.81

(51) Int. Cl.³ : **G 11 B 23/04, G 11 B 15/26**

(54) Dispositif d'entraînement de bande à galet d'entraînement mobile.

(30) Priorité : 12.12.80 FR 8026362

(43) Date de publication de la demande :
30.06.82 Bulletin 82/26

(45) Mention de la délivrance du brevet :
13.06.84 Bulletin 84/24

(84) Etats contractants désignés :
CH DE GB IT LI NL

(56) Documents cités :
DE-C- 751 075
FR-A- 706 197
FR-A- 1 427 665
FR-A- 2 142 487
GB-A- 860 272
US-A- 3 802 644
US-A- 3 907 230
US-A- 4 146 194
US-A- 4 159 811
US-A- 4 219 169

(73) Titulaire : ENERTEC
12, Place des Etats-Unis
F-92120 Montrouge (FR)

(72) Inventeur : Merle, Jean Pierre
7, rue Cécile-Dinant
F-92140 Clamart (FR)

(74) Mandataire : Bentz, Jean-Paul
GIERS SCHLUMBERGER Service BREVETS 12, place
des Etats-Unis
F-92124 Montrouge Cedex (FR)

Jouve, 18, rue St-Denis, 75001 Paris, France

## Description

La présente invention concerne selon le préambule de la revendication 1 un dispositif d'entraînement de bande, notamment pour enregistreur magnétique, comprenant : un bâti, deux tambours montés tournants dans un même plan sur ledit bâti autour de deux axes parallèles respectifs ; une bande entourant l'un au moins des tambours, la bande et les deux tambours sur lesquels elle peut s'enrouler formant deux bobines reliées par une portion de bande accessible ; un galet flottant tournant dans le même plan que les bobines et tangent à la périphérie de chacune de celles-ci ; et une courroie sans fin, tendue, susceptible de subir un allongement élastique, interposée entre le galet flottant et les bobines, passant autour de ce galet flottant ainsi qu'autour d'au moins un galet de renvoi monté tournant autour d'un axe fixe par rapport au bâti, de l'autre côté d'une ligne joignant les axes de tambours par rapport au galet flottant, cette courroie venant en appui sur un arc de la périphérie de chacune des bobines pour assurer la tension de la portion de bande accessible.

Des dispositifs de ce type, par exemple décrits dans les brevets français FR-A-2 212 981 et américain US-A-3 907 230 (J.-P. Merle et C. Pavie) auxquels on pourra avantageusement se référer, sont depuis leur invention, il y a quelques années, très largement utilisés en particulier dans le domaine de l'enregistrement magnétique de données numériques sur cassettes ou chargeurs, en raison des avantages significatifs qu'ils procurent.

Toutefois, les améliorations rapides et les exigences toujours croissantes des éléments électroniques qui coopèrent, dans des systèmes d'enregistrement magnétique, avec les éléments mécaniques que constituent ces dispositifs d'entraînement de bande, font apparaître des limitations de ces derniers, qui freinent le développement technique dans ce domaine.

Dans ce contexte, le but de la présente invention est de proposer un système d'entraînement de bande susceptible d'assurer, même dans des conditions sévères d'utilisation, un entraînement reproductible et régulier de la bande, se manifestant notamment par une tension de bande sensiblement constante.

A cette fin, le dispositif conforme à l'invention, du type précédemment décrit, est essentiellement caractérisé en ce que le galet flottant est solidaire en rotation d'un élément qui est entraîné en rotation autour de lui-même et mécaniquement assujetti à se déplacer, par rapport au bâti, pendant le dévidage d'une bobine et le remplissage de l'autre, suivant une trajectoire circulaire autour d'un axe situé d'un même côté que ce galet par rapport à une ligne joignant lesdits axes de tambours, et en ce que ce galet flottant, qui suit une trajectoire au moins voisine de cette trajectoire circulaire, constitue l'organe d'entraînement de la bande et entraîne la bande par friction par l'intermédiaire de ladite courroie, sur laquelle il appuie.

Dans une application avantageuse du dispositif de l'invention selon le préambule de la revendication 2, ledit premier galet flottant est disposé du même côté que ledit galet de renvoi par rapport à la ligne joignant les axes des tambours et la courroie passe autour d'un second galet flottant, tournant dans le même plan que les bobines, tangent à la périphérie de chacune de celles-ci et situé de l'autre côté du premier galet flottant par rapport à la ligne joignant les axes des tambours.

Par exemple, le galet d'entraînement de bande est solidaire en rotation d'un disque entraîné qui lui est au moins approximativement coaxial et constitue l'élément entraîné, ce disque étant tangent à, et entraîné par un disque moteur dont l'axe est confondu avec celui de ladite trajectoire circulaire.

Le dispositif peut comprendre un bras monté oscillant sur le bâti, en un premier point de sa longueur, autour d'un axe confondu avec celui de ladite trajectoire circulaire, et l'élément entraîné peut être monté à rotation autour d'un axe parallèle à celui de la trajectoire circulaire et fixe par rapport à un second point de la longueur de ce bras, ladite trajectoire circulaire étant définie par le mouvement de ce second point au cours de l'oscillation de ce même bras autour de son premier point.

Dans un mode de réalisation simple et avantageux du dispositif de l'invention, l'élément entraîné et le galet d'entraînement de bande sont au moins approximativement coaxiaux et rendus solidaires en rotation l'un de l'autre par une liaison assurant la transmission du mouvement de rotation même en présence d'un décalage entre les axes de l'élément entraîné et du galet d'entraînement de bande, à la manière d'un joint de Oldham. De préférence, cette liaison mécanique est constituée par un joint à soufflet assurant une transmission homocinétique du mouvement de rotation.

Dans le cas où le dispositif comprend un disque entraîné et un disque moteur, le disque entraîné peut être mécaniquement assujetti à sa trajectoire circulaire simplement par son roulement sur le disque moteur. De plus, comme la courroie passe autour du galet d'entraînement de bande, ce galet peut être maintenu sur sa trajectoire et en appui contre les bobines par la force d'application qu'exerce sur lui la courroie en direction de ces bobines. Dans le mode de réalisation utilisant ces deux possibilités, le disque entraîné et le disque moteur sont de préférence constitués par des pignons.

Toutefois, on peut aussi prévoir, surtout si le dispositif est incorporé dans un chargeur, et comprend un bras monté oscillant sur le bâti, que l'élément entraîné, duquel le galet d'entraînement de bande est solidaire en rotation, soit un arbre directement entraîné par un moteur monté sur ledit bras oscillant.

Dans la plupart des applications du dispositif de l'invention, le bâti est une platine qui constitue une paroi d'un boîtier formant cassette ou chargeur ; le galet d'entraînement de bande et son disque ou

2

pignon entraîné peuvent alors être disposés de part et d'autre de cette paroi et reliés par un arbre susceptible de se déplacer dans une fente circulaire pratiquée dans cette même paroi.

Les caractéristiques précédemment énoncées confèrent au dispositif de l'invention de nombreux avantages et possibilités. Tout d'abord, ce dispositif assure une tension de bande sensiblement constante, tout au long de l'opération de dévidage d'une bobine et du remplissage de l'autre ; en outre, cette tension est sensiblement indépendante du sens de défilement de la bande, c'est-à-dire qu'elle ne subit aucune modification sensible lorsque la bobine débitrice devient la bobine réceptrice et réciproquement.

Compte tenu de la régularité de l'entraînement et de l'homogénéité de la tension de bande, il devient possible d'agir sur certains paramètres, comme, par exemple, la largeur de la courroie, pour ajuster cette tension de bande à une valeur désirée.

La bande, entraînée par le dispositif de l'invention, présente une grande stabilité en hauteur ; en d'autres termes, cette bande a une tendance naturelle à former des bobines cylindriques et non pas des bobines coniques de hauteur incontrôlée. Cette caractéristique permet de guider la bande par un guidage très léger sur ses bords, ne faisant apparaître sur cette bande qu'une usure très minime par rapport à celle qu'introduisent les organes de guidage normalement nécessaires dans les dispositifs connus.

Le dispositif de l'invention résoud le problème classique et difficile du parallélisme des axes des galets presseur et moteur utilisés dans les dispositifs traditionnels d'entraînement de bande. En outre, la suppression de ces galets presseur et moteur permet d'augmenter, pour un même encombrement de la cassette, la longueur de la portion de bande accessible, d'augmenter le nombre de têtes magnétiques et d'éloigner le moteur d'entraînement de ces têtes.

Le galet d'entraînement étant en contact avec les deux bobines par l'intermédiaire seulement de l'épaisseur de la courroie, les temps de démarrage et d'arrêt de la bande sont sensiblement réduits. Cette caractéristique est de grande importance puisqu'elle concerne la réduction d'un défaut affectant de façon beaucoup plus sévère les éléments mécaniques que les éléments électroniques, à savoir l'inertie.

Le dispositif d'entraînement de l'invention s'est en outre révélé capable de résorber les boucles apparaissant dans les bobines qui ont été soumises à des écarts de température importants. On sait en effet que les bobines, par exemple soumises au froid, se rétractent en formant des paquets de spires séparés par des vides, ou boucles, que les dispositifs d'entraînement actuels ne parviennent normalement pas à résorber.

Enfin, le dispositif d'entraînement de l'invention est facile à intégrer dans des cassettes, ou des chargeurs étanches.

D'autres caractéristiques et avantages de l'invention ressortiront clairement de la description qui en est faite ci-après, à titre indicatif et nullement limitatif, en référence aux dessins annexés, sur lesquels :

La figure 1A est une vue en plan d'un premier mode de réalisation du dispositif de l'invention, intégré dans une cassette ;

La figure 1B est une vue en coupe partielle suivant les flèches I.I de la figure 1A ;

La figure 1C est une vue latérale extérieure de la cassette apparaissant sur la figure 1A ;

La figure 2A est une vue en plan d'un second mode de réalisation du dispositif de l'invention, intégré dans une cassette ;

La figure 2B est une vue en coupe partielle suivant les flèches II.II de la figure 2A, dans laquelle toutefois seuls sont vus en coupe les éléments hachurés, le galet II n'étant notamment pas vu en coupe.

La figure 2C est une vue latérale extérieure de la cassette apparaissant sur la figure 2A ;

La figure 3A est une vue en plan d'un troisième mode de réalisation du dispositif de l'invention, intégré dans un chargeur étanche ;

La figure 3B est une vue en coupe partielle suivant les lignes III.III de la figure 3A ;

La figure 4A est une vue en plan d'un quatrième mode de réalisation du dispositif de l'invention, intégré dans une cassette ;

La figure 4B est une vue en coupe partielle suivant les flèches IV.IV de la figure 4A ;

La figure 4C est une vue latérale extérieure de la cassette représentée sur la figure 4A.

La figure 5 est une vue en coupe agrandie des éléments représentés à l'intérieur du cercle V de la figure 2B, et notamment du galet 11, dans un cinquième mode de réalisation de l'invention dont les vues en plan, en coupe partielle, et latérale sont par ailleurs identiques aux figures 2A, 2B et 2C.

Les mêmes chiffres de référence seront utilisés, sur les différentes figures, pour désigner les mêmes éléments.

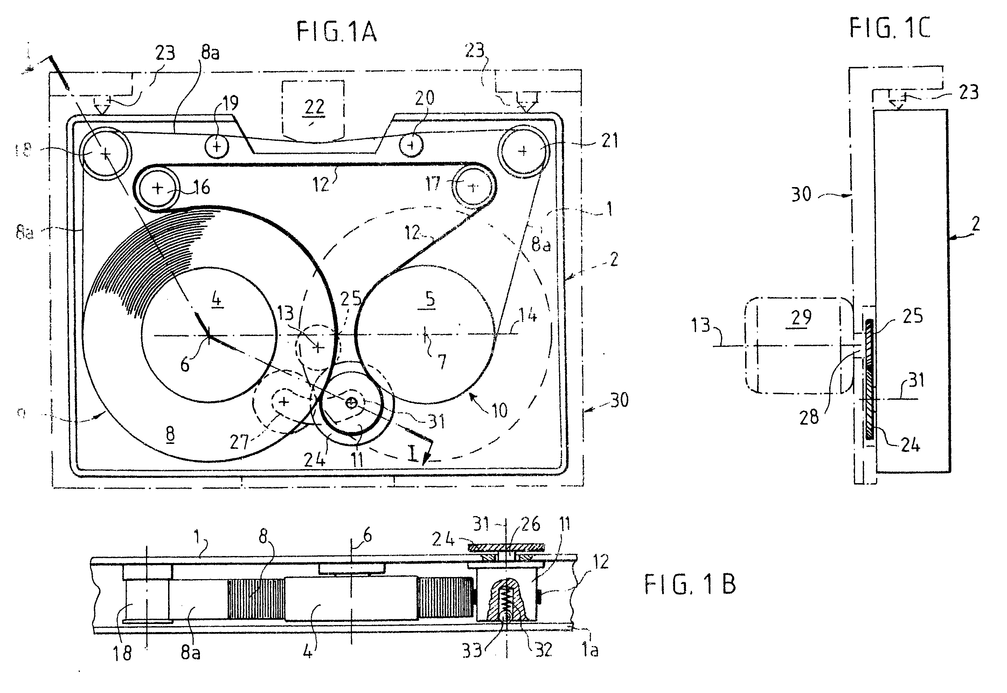

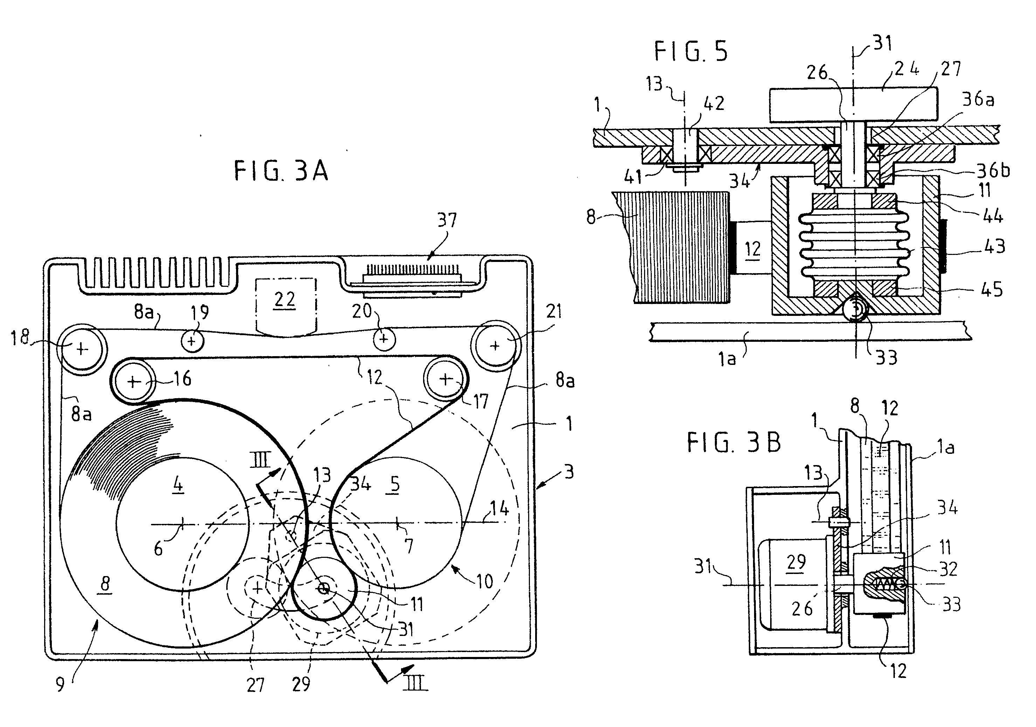

Sur les figures en plan 1A à 4A sont représentés : un bâti ou platine 1, constitué par une paroi d'une cassette 2 (figures 1A, 2A, 4A, 5) ou d'un chargeur étanche 3 (figure 3A) ; deux tambours 4 et 5 montés à rotation dans un même plan sur le bâti 1, autour de deux axes parallèles respectifs 6 et 7 ; une bande 8 enroulée sur le ou les tambours et formant avec ceux-ci deux bobines 9 et 10 reliées par une portion de bande accessible 8a ; un galet 11, tournant dans le même plan que les bobines, et tangent à la périphérie de chacune de celles-ci ; et une courroie sans fin 12, tendue, susceptible de subir un allongement élastique, passant entre le galet 11 et les bobines 9 et 10, et venant en appui sur un arc de la périphérie de chacune de ces dernières. Le galet 11 est rendu solidaire en rotation d'un élément entraîné en rotation autour de lui-même, tel qu'un disque entraîné 24, un arbre 26 ou l'ensemble des deux. Cet élément 24, 26 ou 24 et 26, est, par des moyens qui sont décrits ci-après, mécaniquement assujetti à se déplacer, par rapport au bâti, pendant le dévidage d'une bobine et le remplissage de l'autre, suivant une trajectoire circulaire dont l'axe 13 (perpendiculaire au plan des vues en plan) est situé d'un même côté que le galet 11 par rapport à une ligne 14 joignant les axes 6 et 7 des tambours 4 et 5. Ce galet 11 suit lui-même cette trajectoire circulaire ou une trajectoire quasi circulaire très voisine.

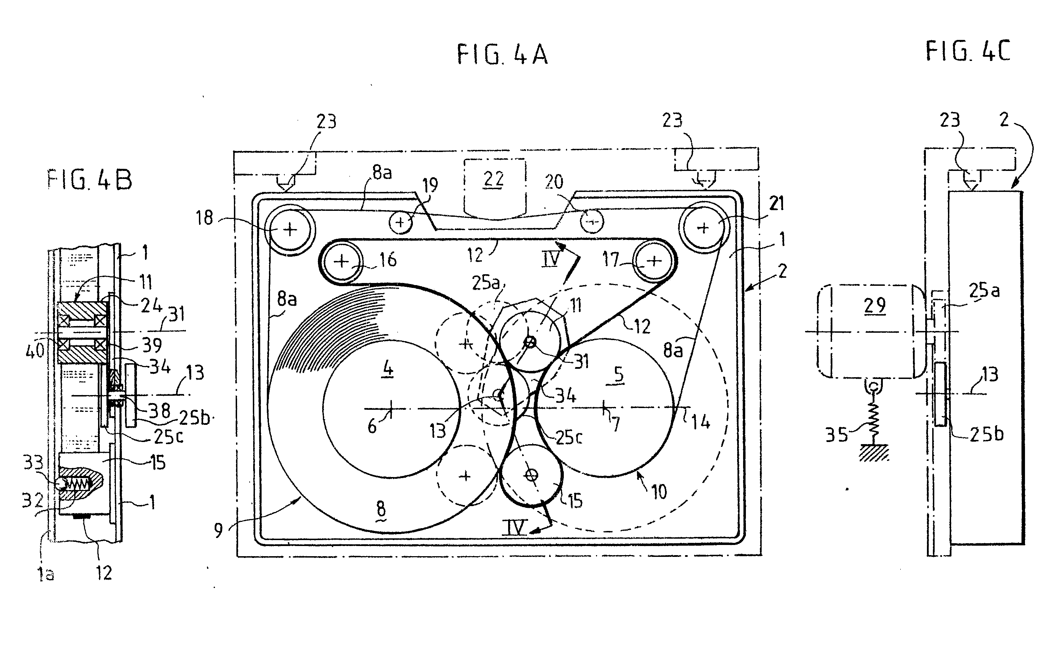

Comme représenté sur les différentes figures, la courroie 12 passe autour d'un galet tangent à la périphérie de chacune des deux bobines, par exemple autour du galet 11 (figures 1A à 3A et 5), ou autour d'un galet baladeur 15 (figure 4A), ainsi que, de façon traditionnelle, sur des galets de renvoi 16 et 17 espacés l'un de l'autre suivant une direction sensiblement parallèle à la droite 14 joignant les axes 6 et 7 des tambours 4 et 5. Suivant un principe connu et appliqué dans l'art antérieur, notamment dans les brevets mentionnés ci-dessus auxquels on pourra avantageusement se référer, la courroie élastique 12 coopère avec le galet 11 ou 15 qui est tangent aux deux bobines et autour duquel passe cette courroie, pour assurer la tension de la portion de bande accessible 8a.

Cette portion de bande accessible 8a est, de façon également connue, guidée par des galets de guidage 18, 19, 20, 21, de manière à pouvoir être appliquée contre une tête magnétique 22 devant laquelle elle peut défiler.

La tête magnétique 22 appartient soit (figures 1A, 2A, 4A) au système d'enregistrement et de reproduction utilisant la cassette 2, dans lequel cette cassette est mise en place en appui contre des plots 23, soit au chargeur étanche 3 (figure 3A).

Le montage, sur la platine 1, des tambours 4, 5 et des différents galets 16 à 21 peut être réalisé par des moyens classiques, qu'il est donc inutile de décrire.

D'autre part la courroie 12 peut être réalisée dans des matériaux actuellement utilisés dans la technique pour ce type de courroie d'entraînement, notamment dans des élastomères susceptibles de subir un allongement élastique d'environ 10 % par exemple. En fait cependant, le dispositif de l'invention permet même l'utilisation de courroies susceptibles de subir un allongement élastique inférieur à 5 %.

Selon une caractéristique importante de l'invention, le galet 11 à trajectoire circulaire ou quasi circulaire constitue l'organe d'entraînement de la bande 8. A cette fin le galet 11 qui, dans tous les modes de réalisation, exerce une pression à la fois sur la courroie 12 et, par l'intermédiaire de celle-ci, sur la périphérie de chacune des bobines 9 et 10, entraîne par friction cette courroie 12, qui entraîne à son tour la bande 8.

Dans les modes de réalisation illustrés par les figures 1A à 1C, 2A à 2C, 4A à 4C et 5, le galet 11 à trajectoire circulaire ou quasi circulaire est solidaire en rotation d'un disque entraîné 24, au moins approximativement coaxial à ce galet, qui est tangent à, et entraîné par, un disque moteur 25 (25c sur les figures 4A et 4B) monté rotatif autour de l'axe 13 qui est celui de la trajectoire circulaire du disque entraîné 24.

Dans le mode de réalisation des figures 4A à 4C, le disque entraîné 24 est simplement formé par un prolongement axial du galet 11 au-delà de sa zone utilisée pour assurer la fonction d'entraînement de la courroie 12, de sorte que le disque entraîné 24 et le galet 11 forment une pièce monobloc.

Par contre, dans les modes de réalisation des figures 1A à 1C et 2A à 2C et 5, le galet 11 d'entraînement de bande est rendu solidaire en rotation du disque entraîné 24 au moyen d'un arbre 26 qui est coaxial au disque 24, traverse le bâti ou platine 1 et suit le mouvement circulaire de ce disque 24 en se déplaçant dans une fente en arc de cercle 27 pratiquée dans cette platine 1. Dans ces modes de réalisation, le disque entraîné 24 et le galet 11 sont donc disposés de part et d'autre de la platine 1 et l'arbre 26 est, au même titre que le disque 24, entraîné en rotation autour de lui-même et assujetti à la trajectoire circulaire d'axe 13.

Si l'on se reporte maintenant plus spécifiquement aux figures 1A à 1C, on remarque d'une part que, selon le mode de réalisation qui y est illustré, la courroie 12 passe autour du galet 11, d'autre part que ce galet est coaxial et rigidement lié, par l'intermédiaire de l'arbre 26, au disque entraîné 24 et suit donc aussi une trajectoire circulaire, d'autre part encore que cette même trajectoire est définie par le roulement du disque entraîné 24 sur le disque moteur 25, et enfin que ces disques entraînés 24 et moteur 25 sont constitués par des pignons engrenés l'un avec l'autre.

Plus précisément, le disque ou pignon moteur 25 est porté par un arbre 28 susceptible d'être entraîné en rotation par un moteur 29 fixe par rapport au châssis 30 du système d'enregistrement et de lecture, dans lequel la cassette 2 est insérée en appui contre le plot 23, précédemment mentionnés, de ce châssis. Le galet 11 est appuyé contre les bobines 9 et 10 par la force qu'exerce sur lui la courroie 12 qui l'entoure partiellement, et le disque ou pignon entraîné 24 est lui-même appliqué contre le disque ou pignon moteur 25 par cette même force. Au fur et à mesure qu'une bobine se remplit et que l'autre se vide, l'axe 31 du pignon entraîné 24 tourne autour de l'axe 13 du pignon moteur 25, et l'arbre 26 se déplace dans la fente circulaire 27 ; comme les pignons 24 et 25 restent ainsi engrenés et tangents, la trajectoire de l'axe 31 du pignon 24 est un cercle.

L'entraînement du galet 11 par pignons 24, 25 présente l'avantage, qu'il convient de noter, de permettre aisément, grâce à la possibilité d'un débattement entre les axes 13 et 31 sans rupture de l'engrènement, le rattrapage de jeux qui peuvent provenir soit de ce que le galet 11 a une course importante qui gêne l'assujettissement de ce galet à une trajectoire circulaire, soit de déformations de la cassette, du chargeur ou de leurs éléments constitutifs, résultant de changements de température.

La courroie 12 passant autour du galet d'entraînement 11, les galets de renvoi 16 et 17 sont disposés, par rapport à ce galet 11, de l'autre côté et la ligne 14 joignant les axes 6 et 7 afin d'augmenter la longueur de l'arc de la périphérie de chacune des bobines 9 et 10, sur lequel la courroie est en contact avec la bande.

Comme on le voit sur la figure 1B, le galet 11 d'entraînement de bande peut être guidé dans le plan de sa trajectoire par et entre la platine 1 d'une part, et la face 1a de la cassette, opposée à la platine 1, d'autre part. A cette fin, le galet 11 est par exemple doté d'un logement cylindrique axial recevant un ressort 32 et une bille 33, le ressort repoussant la bille vers l'extérieur. Le galet 11 est en appui sur la face interne de la platine 1 et la bille 33 roule sur la face opposée 1a de la cassette 2.

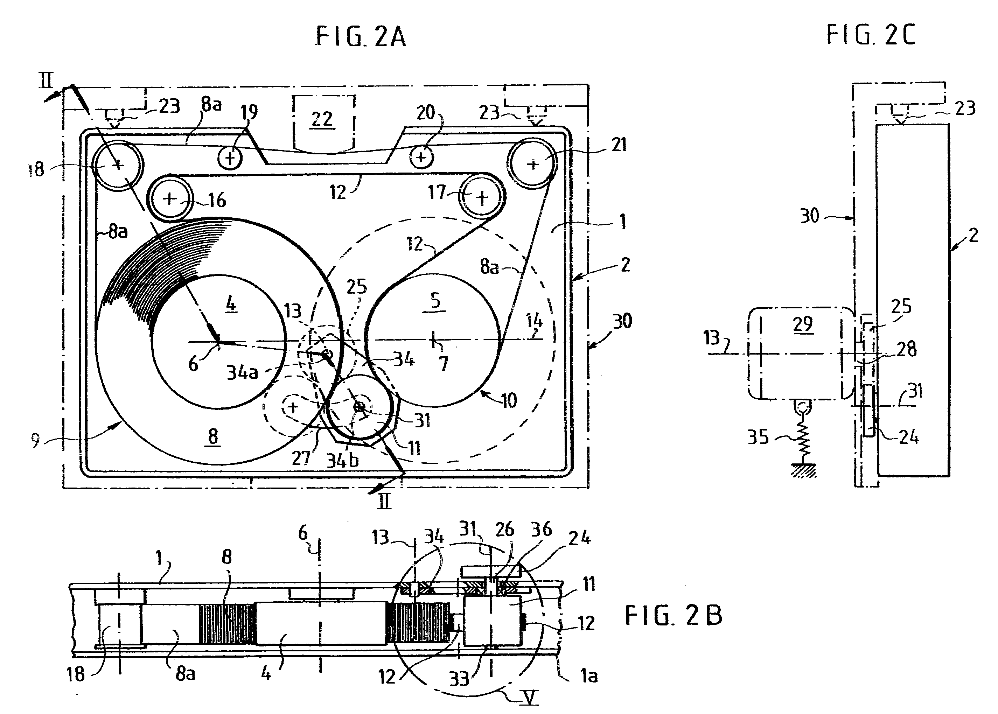

Comme précédemment mentionné, les figures 2A à 2C sont communes à un second et à un cinquième mode de réalisation de l'invention. Le second mode de réalisation sera décrit en référence aux figures 2A à 2C et les particularités du cinquième mode de réalisation seront décrites en référence à la figure 5.

Si l'on se reporte maintenant plus spécifiquement à ces figures 2A à 2C, on remarque que le second mode de réalisation présente essentiellement deux différences avec le premier mode de réalisation décrit ci-dessus, à savoir d'une part que la trajectoire circulaire du disque entraîné 24 et de l'arbre 25 est définie par un bras 34 monté oscillant, en un premier point 34a de sa longueur, autour de l'axe 13 de la trajectoire circulaire, et d'autre part que le disque moteur 25 entraîne le disque entraîné 24 par friction et non plus par engrenage.

Il convient de noter qu'il serait possible néanmoins de définir la trajectoire circulaire au moyen d'un bras oscillant 34 mais de conserver aux disques entraîné 24 et moteur 25 la forme de pignons au lieu de celle de disques de friction.

Dans ce second mode de réalisation, le bras 34 est, selon l'une quelconque des techniques conventionnelles accessibles, monté oscillant sur la platine 1 autour de l'axe 13 de la trajectoire circulaire et le disque entraîné 24 et l'arbre 26 sont montés à rotation autour de l'axe 31 qui est parallèle à l'axe 13 et fixe par rapport à un second point 34b du bras oscillant 34. Comme le montre la figure 2C, le disque moteur 25 est appliqué contre le disque entraîné 24 par une force élastique, symboliquement représentée par un ressort 35 sollicitant, dans la direction souhaitée, le moteur 29 monté légèrement flottant par rapport au châssis 30.

Dans ce second mode de réalisation, le galet 11 est coaxial et rigidement lié à l'arbre 26 et au disque entraîné 24, de sorte qu'il suit lui-même la trajectoire circulaire d'axe 13. Par exemple (figure 2B) ce galet 11 est monté sur le bras 34 par l'engagement de l'arbre 26 dans un palier 36 solidaire de ce bras. D'autre part le galet 11 présente un logement recevant, comme précédemment, un ressort et une bille 33 susceptible de rouler sur la face 1a de la cassette 2, c'est-à-dire qu'il se présenterait, en coupe partielle, comme le galet 11 du premier mode de réalisation (fig. 1B).

Les figures 3A et 3B se rapportent au cas où le dispositif de l'invention est intégré dans un chargeur étanche 3. Dans ce mode de réalisation, la tête magnétique 22 et le moteur 29 sont disposés à l'intérieur du boîtier que constitue le chargeur et ce dernier comporte un ensemble 37 de broches de connexion électrique permettant d'injecter dans le chargeur l'énergie électrique nécessaire au fonctionnement du moteur, d'injecter les signaux électriques d'écriture destinés à être transformés par la tête 22 en informations enregistrées sur la bande, et de recueillir des signaux électriques de lecture engendrés par la tête 22 en réponse aux informations déjà enregistrées sur la bande. L'homme de l'art comprendra en conséquence que les broches 37 sont reliées à la tête 22 et au moteur 29 par des conducteurs électriques qui, par souci de clarté, n'ont pas été représentés sur les dessins.

Comme on le voit sur la figure 3B, le galet 11, toujours doté d'un logement recevant un ressort 32 et une bille 33, toujours assujetti à une trajectoire circulaire d'axe 13 au moyen d'un bras oscillant 34, et toujours solidaire en rotation d'un arbre coaxial 26 susceptible de se déplacer dans une fente circulaire 27 pratiquée dans la platine, est entraîné en rotation sur lui-même par le moteur 29 directement monté sur le bras oscillant coaxialement au galet 11 et attaquant directement l'arbre 26.

Le quatrième mode de réalisation de l'invention, représenté sur les figures 4A à 4C, se distingue essentiellement du second mode de réalisation (figures 2A à 2C) par le fait que la courroie 12 ne passe pas autour du galet 11 d'entraînement de bande, mais autour d'un galet baladeur traditionnel 15. Dans ce quatrième mode de réalisation, la fonction de tension de la portion de bande accessible 8a est assurée par le galet baladeur 15 et la courroie, le galet 11 n'assurant que l'entraînement de la bande.

Comme le montrent les figures 4B et 4C, ce mode de réalisation utilise en fait trois disques 25a, 25b, et 25c de type « à friction ».

Les disques 25b et 25c (figure 4B) sont coaxiaux, solidaires en rotation, disposés de part et d'autre de la platine 1, et réunis par un arbre 38 qui est disposé sur l'axe 13 de la trajectoire circulaire du galet 11 et traverse la platine 1 à l'endroit de cet axe.

Le disque 25c, constituant le disque moteur pour le galet 11, appuie sur le prolongement axial de ce galet qui constitue le disque entraîné 24. Le galet 11 est monté à rotation, au moyen de paliers 39, 40 sur l'axe 31, fixe par rapport au bras 34, ce bras étant lui-même monté oscillant sur la platine 1, comme dans les second et troisième modes de réalisation, autour de l'axe 13 de la trajectoire circulaire. Enfin, comme le montre la figure 4B, le galet baladeur est guidé, dans le plan de sa trajectoire, comme l'est le galet 11 sur la figure 1B.

La figure 5 représente, comme cinquième mode de réalisation, une variante applicable dans de nombreux cas, en particulier dans tous les cas où la trajectoire circulaire est définie par un bras oscillant 34 et où la courroie 12 passe autour du galet d'entraînement 11. On retrouve, sur la figure 5, la plupart des éléments décrits en référence à la figure 2B.

Cependant la plus grande échelle de la figure 5, permet de voir que le palier 36 est en fait un ensemble de deux paliers 36a, 36b logés dans une partie cylindrique de l'arbre 34 et que ce dernier est également monté oscillant au moyen d'un autre palier 41 monté sur un tourillon 42 coaxial à l'axe 13 et solidaire de la platine 1.

Il convient de noter, tant pour la figure 2B que pour la figure 5, que si le galet 11 ne paraît pas tangent à la bobine représentée en coupe, c'est simplement parce que la ligne de coupe, contrairement au cas de la figure 1B, ne passe pas par le point de tangence.

Sur la figure 5, le galet 11 ne présente plus un logement cylindrique recevant un ressort 32 et une bille 33, mais un logement conique recevant seulement la bille 33. Cependant l'originalité essentielle du cinquième mode de réalisation se situe dans le fait que le galet 11 est creux et contient une liaison mécanique 43 qui assure la transmission, au galet d'entraînement 11, du mouvement de rotation du disque entraîné 24 et de l'arbre 26 même si le galet 11 n'est pas exactement coaxial au disque entraîné 24 (c'est-à-dire encore à l'arbre 26 puisque cet arbre et ce disque entraîné sont coaxiaux). Cette liaison mécanique, qui opère donc à la manière d'un joint de Oldham, peut être constituée par un tel joint. Toutefois, comme le montre la figure 5, cette liaison est de préférence constituée par un joint à soufflet qui assure une transmission homocinétique du mouvement de rotation. Ce joint est par exemple fixé sur des joues 44 et 45 respectivement solidaires de l'arbre 26 et du galet 11 et constitué par un joint flexible en nickel ou en acier inoxydable tel que ceux que fabriquent les sociétés ACME ou PIC.

Conformément à ce qu'il est dit précédemment, un tel joint peut aussi être utilisé, par exemple, pour rendre solidaires en rotation l'arbre 26 et le galet 11 dans le troisième mode de réalisation (fig. 3B) en évitant ainsi d'assujettir le galet 11 à une trajectoire strictement circulaire et en lui permettant de se déplacer sur une trajectoire seulement quasi circulaire.

Bien que la description n'ait jusqu'à présent fait aucune hypothèse sur les dimensions relatives des éléments constitutifs du dispositif de l'invention, il convient de noter que la position de l'axe de rotation 13 ou la longueur utile du bras oscillant 34, c'est-à-dire la distance séparant les points 34a et 34b, ne peuvent être choisies de façon arbitraire.

Plus précisément, si l'on se reporte à nouveau à la figure 1A, et si l'on convient que :

$R_0$ désigne le rayon d'une bobine de rayon minimum, par exemple celui de la bobine vide 10,

$R_1$ désigne le rayon d'une bobine de rayon maximum, par exemple celui de la bobine pleine 9,

r désigne le rayon du galet 11 d'entraînement de bande, augmenté de l'épaisseur de la courroie 12,

d désigne la moitié de la distance entre les axes 6 et 7 des bobines 9 et 10,

h désigne la distance entre l'axe 13 de la trajectoire circulaire et la droite 14 joignant les axes 6 et 7,

l désigne la distance entre l'axe 13 de la trajectoire circulaire et l'axe 31 de rotation du galet 11 sur lui-même,

X désigne l'expression :

$$\sqrt{\left(\sqrt{\frac{R_0^2 + R_1^2}{2}} + r\right)^2 - d^2}$$

Y désigne l'expression :

$$\frac{(R_1 + r)^2 - (R_0 + r)^2}{4\,d},$$

Z désigne l'expression :

$$\sqrt{(R_1 + r)^2 - (d + Y)^2}.$$

Si l'on choisit des tambours 4 et 5 de même rayon, et si l'on place l'axe 13 de la trajectoire circulaire à égale distance des axes 6 et 7 des tambours 4 et 5, il est nécessaire de donner aux distances h et l les valeurs satisfaisant aux égalités :

$$h = \frac{Y^2 + Z^2 - X^2}{2(Z - X)}$$

$$\text{et} \quad 1 = X - h$$

Il est également possible, bien que non indispensable, de rechercher, par des techniques numériques faisant appel à un calculateur automatique, et en considérant la distance d comme un paramètre ajustable, une nouvelle relation, liant la distance d et les rayons $R_0$, $R_1$ et r.

Pour ce faire, par exemple, on choisit, outre $R_0$, $R_1$ et r, deux autres rayons $R_2$ et $R_3$ tels que :

$$R_0 < R_2 < R_1 \quad \text{et}$$

$$(R_0)^2 + (R_1)^2 = (R_2)^2 + (R_3)^2 \; ;$$

On calcule la grandeur $h_m$ qui est l'homologue de la grandeur h, mais dans laquelle $R_2$ remplace $R_0$ et $R_3$ remplace $R_1$, et l'on cherche, en appliquant des techniques d'optimisation bien connues, la valeur du paramètre d pour laquelle la fonction $(h_m - h)^2$ atteint sa valeur minimale. Cette valeur du paramètre *d* étant adoptée, les distances h et l sont calculées par les égalités données ci-dessus.

## Revendications

1. Dispositif d'entraînement de bande, notamment pour enregistreur magnétique, comprenant : un bâti (1), deux tambours (4, 5) montés tournants dans un même plan sur ledit bâti autour de deux axes parallèles respectifs (6, 7) ; une bande (8) entourant l'un au moins des tambours, la bande et les deux tambours sur lequels elle peut s'enrouler formant deux bobines (9, 10) reliées par une portion de bande accessible ; un galet flottant (11) tournant dans le même plan que les bobines et tangent à la périphérie de chacune de celles-ci ; et une courroie sans fin (12), tendue, susceptible de subir un allongement élastique, interposée entre le galet flottant et les bobines, passant autour de ce galet flottant ainsi qu'autour d'au moins un galet de renvoi (16) monté tournant autour d'un axe fixe par rapport au bâti, de l'autre côté d'une ligne joignant les axes de tambours par rapport au galet flottant, cette courroie venant en appui sur un arc de la périphérie de chacune des bobines pour assurer la tension de la portion de bande accessible, caractérisé en ce que le galet flottant est solidaire en rotation d'un élément (24, 26) qui est entraîné en rotation autour de lui-même et mécaniquement assujetti à se déplacer, par rapport au bâti, pendant le dévidage d'une bobine et le remplissage de l'autre, suivant une trajectoire circulaire autour d'un axe (13) situé d'un même côté que ce galet par rapport à la ligne (14) joignant lesdits axes de tambours, et en ce que ce galet flottant (11), qui suit une trajectoire au moins voisine de cette trajectoire circulaire, constitue l'organe d'entraînement de la bande et entraîne cette bande par friction par l'intermédiaire de ladite courroie, sur laquelle il appuie.

2. Dispositif suivant la revendication 1 modifiée en ce que ledit premier galet flottant (11) est disposé du même côté que ledit galet de renvoi (16) par rapport à la ligne (14) joignant les axes des tambours et en ce que la courroie passe autour d'un second galet flottant (15), tournant dans le même plan que les bobines, tangent à la périphérie de chacune de celles-ci et situé de l'autre côté du premier galet flottant (11) par rapport à la ligne (14) joignant les axes des tambours.

3. Dispositif suivant la revendication 1, caractérisé en ce que ledit galet flottant (11) d'entraînement de bande est solidaire en rotation d'un disque entraîné (24) qui lui est au moins approximativement coaxial et constitue ledit élément entraîné, ce disque étant tangent à, et entraîné par, un disque moteur (25) dont l'axe (13) est confondu avec celui de ladite trajectoire circulaire.

4. Dispositif suivant l'une quelconque des revendications précédentes, caractérisé en ce qu'il comprend un bras (34) monté oscillant sur le bâti, en un premier point de sa longueur, autour d'un axe (13) confondu avec celui de ladite trajectoire circulaire, et en ce que ledit élément entraîné (24, 26) est monté à rotation autour d'un axe parallèle (31) à celui de la trajectoire circulaire et fixe par rapport à un second point de la longueur de ce bras, ladite trajectoire circulaire étant définie par le mouvement de ce second point au cours de l'oscillation de ce même bras autour de son premier point.

5. Dispositif suivant l'une quelconque des revendications précédentes, caractérisé en ce que ledit élément entraîné (24, 26) et ledit galet d'entraînement de bande (11) sont au moins approximativement coaxiaux et rendus solidaires en rotation l'un et l'autre par une liaison assurant la transmission du mouvement de rotation même en présence d'un décalage entre les axes de l'élément entraîné et du galet d'entraînement de bande, à la manière d'un joint de Oldham.

6. Dispositif suivant la revendication 5, caractérisé en ce que ladite liaison est constituée par un joint à soufflet (43) assurant une transmission homocinétique du mouvement de rotation.

7. Dispositif suivant l'une quelconque des revendications 1 et 4 à 6 combinée à la revendication 3, caractérisé en ce que ledit disque entraîné (24) est mécaniquement assujetti à sa trajectoire circulaire par son roulement sur ledit disque moteur (25).

8. Dispositif suivant l'une quelconque des revendications 1 et 3 à 7, caractérisé en ce que ledit galet d'entraînement de bande (11) est maintenu sur sa trajectoire et en appui contre les bobines par la force d'application qu'exerce sur lui la courroie en direction de ces bobines.

9. Dispositif suivant les revendications 7 et 8 considérées en combinaison, caractérisé en ce que ledit galet d'entraînement de bande (11) et ledit disque entraîné (24) sont coaxiaux et rigidement liés l'un à l'autre, de sorte que ledit disque entraîné est mécaniquement assujetti à sa trajectoire circulaire par son roulement sur ledit moteur et par la force d'application qu'exerce la courroie sur ledit galet d'entraînement de bande en direction des bobines.

# 0 055 150

10. Dispositif suivant la revendication 9, caractérisé en ce que ledit disque entraîné et ledit disque moteur sont constitués par des pignons.

11. Dispositif suivant l'une quelconque des revendications 1, 5, 6 et 8 combinée à la revendication 4, caractérisé en ce que ledit élément entraîné (26) est un arbre entraîné par un moteur monté sur ledit bras oscillant.

12. Dispositif suivant l'une quelconque des revendications précédentes, caractérisé en ce que ledit bâti (1) est une platine qui constitue une paroi d'un boîtier formant cassette ou chargeur.

13. Dispositif suivant la revendication 3 ou 4 combinée à la revendication 12, caractérisé en ce que ledit galet d'entraînement de bande (11) et ledit disque entraîné (24) sont disposés de part et d'autre de ladite paroi et sont reliés par un arbre (26) susceptible de se déplacer dans une fente circulaire pratiquée dans cette paroi.

## Claims

1. A tape entrainment device particularly for a magnetic recorder comprising ; a support (1) two spools (4, 5), mounted to rotate in the same plane on the said support about two respective parallel axes (6, 7) ; a tape (8) encircling at least one of the spools, the tape and the two spools on which the tape can be wound forming two reels (9, 10) connected by an accessible portion of tape ; a floating roller (11) rotating in the same plane as the reels and tangentially to the peripheries thereof ; and an endless belt, which is taut and able to withstand some streching, passing between the roller and the reels, passing around the said tape entrainment roller and around at least one return roller (16), which is mounted so as to rotate about an axis fixed in relation to the support, and which is disposed on the other side of the said line joining the spools axes from the said tape entrainment roller, and said belt engaging an arc of the periphery of each of the reels in order to ensure tensioning of the accessible portion of tape, characterized in that the floating roller rotates integrally with an element (24, 26) which is entrained in rotation about its own axis and which, during winding off from one reel on the other, is forced mechanically to shift its position relative to the support along a circular path about an axis (13) situated on the same side as said roller with respect to the line joining the said spool axes, and in that said floating roller, which follows a path which is at least close to this circular path, forms the tape entrainment element and entrains the tape by friction by means of the said belt on which it bears.

2. A device in accordance with claim 1, modified in that said floating roller (11) is disposed on the same side as said return roller (16) with respect to the line joining the spools axes and in that said belt passes around a second floating roller (15), rotating in the same plane as the reels tangentially to the peripheries thereof and disposed on the other side of the first floating roller with respect to the line (14) joining the spools axes.

3. A device in accordance with claim 1 characterized in that the said tape entrainment roller (11) is integral in rotation with an entrained disc (24) which is in turn approximately coaxial thereto and forms the said entrained element, said disc being tangential to and entrained by a drive disc (25), the axis of which is identical to that of the said circular path.

4. A device in accordance with any one of the preceding claims, characterized in that it comprises an arm (34) which is mounted to pivot on the support at a first point along its length about an axis which is identical to that of the said circular path ; and in that the said entrained element is mounted to rotate about an axis parallel (31) to that of the circular path and fixed in relation to a second point along the length of this arm, the said circular path being defined by the movement of this second point during pivoting of the said arm about its first point.

5. A device according to any one of the preceding claims characterized in that the said entrained element (24, 26) and the said tape entrainment roller are at least approximately coaxial and are integral in rotation with each other by means of a connection which ensures transmission of the rotary motion even when there is an offset between the axes of the entrained element and the tape entrainment roller, in the manner of an Oldham joint.

6. A device according to claim 5 characterized in that the said connection is formed by a bellows joint (43) which ensures homokinetic transmission of the rotary motion.

7. A device according to any one of the preceding claims 1 and 4 to 6 combined with claim 3, characterized in that the entrained disc is forced mechanically to follow a circular path by its movement on the said drive disc.

8. A device according to any one of the preceding claims 1 and 3 to 7, characterized in that the said tape entrainment roller is maintained in its path and bears against the reels by the force applied to it by the belt in the direction of these reels.

9. A device according to claims 7 and 8 considered in combination characterized in that the said tape entrainment roller and the said entrained disc are coaxial and rigidly connected to each other so that said entrained disc is forced mechanically into its circular path by its movement on the said drive disc and by the force applied by the belt to the said tape entrainment roller in the direction of the reels.

10. A device according to claim 9 characterized in that the said entrained disc and the said drive disc are formed by pinions.

8

**0 055 150**

11. A device according to any one of claims 1, 5, 6 and 8 combined with claim 4, characterized in that the said entrained element is a shaft entrained by a motor mounted on the said pivoting arm.

12. A device according to any one of the preceding claims, characterized in that the said support is a plate which forms a wall of a case forming a cassette or cartridge.

13. A device according to claim 3 or 4 combined with claim 12, characterized in that the said tape entrainment roller and the said entrained disc are arranged on opposite sides of the said wall and are connected by a shaft which can be moved in a circular groove formed in this wall.

**Ansprüche**

1. Bandantriebsvorrichtung, insbesondere für magnetisches Aufzeichnungsgerät, enthaltend : einen Aufbau (1), zwei Trommeln (4, 5), die an dem Aufbau in derselben Ebene um zwei zueinander parallele Achsen (6, 7) drehbar gelagert sind ; ein Band (8), das um wenigstens eine der Trommeln herumgelegt ist, wobei das Band und die beiden Trommeln, auf die es aufgewickelt werden kann, zwei Spulen (9, 10) bilden, welche durch einen zugänglichen Teil des Bandes verbunden sind ; eine freibewegliche Rolle (11), die sich in derselben Ebene wie die Spulen dreht und den Umfang jeder derselben tangiert ; und einen endlosen Riemen (12), der gespannt ist und eine elastische Dehnung erfahren kann sowie zwischen der freibeweglichen Rolle und den Spulen eingefügt ist und um diese freibewegliche Rolle sowie um wenigstens eine Umlenkrolle (16) herumgeführt ist, die um eine aufbaufeste Achse drehbar gelagert ist, und zwar in bezug auf die freibewegliche Rolle auf der anderen Seite einer Linie, welche die Trommelachsen verbindet, wobei dieser Riemen gegen einen Bogen des Umfangs jeder der Spulen angelegt ist, um die Spannung des zugänglichen Teiles des Bandes zu gewährleisten, dadurch gekennzeichnet, daß die freibewegliche Rolle drehfest mit einem Element (24, 26) verbunden ist, das um sich selbst in Drehung versetzt wird und mechanisch gezwungen wird, sich in bezug auf den Aufbau während des Abwickelns einer Spule und des Auffüllens der anderen längs einer kreisförmigen Bahn um eine Achse (13) zu bewegen, welche auf derselben Seite der die Trommelachsen verbindenden Linie (14) wie diese Rolle liegt, und daß diese freibewegliche Rolle (11), die einer Bahn folgt, welche zumindest dieser kreisförmigen Bahn benachbart ist, das Antriebsorgan des Bandes bildet und dieses Band durch Reibung über den Riemen antreibt, gegen den sie andrückt.

2. Vorrichtung nach Anspruch 1, welche dahingehend verändert ist, daß die erste freibewegliche Rolle (11) in bezug auf die die Trommelachsen verbindende Linie (18) auf derselben Seite angeordnet ist wie die Umlenkrolle (16) und daß der Riemen um eine zweite freibewegliche Rolle (15) herumgeführt ist, die in derselben Ebene wie die Spulen rotiert und den Umfang dieser beiden tangiert sowie in bezug auf die die Trommelachsen verbindende Linie (14) auf der anderen Seite wie die erste freibewegliche Rolle (11) angeordnet ist.

3. Vorrichtung nach Anspruch 1, dadurch gekennzeichnet, daß die freibewegliche Rolle (11) zum Antreiben des Bandes drehfest mit einer angetriebenen Scheibe (24) verbunden ist, die ihrerseits wenigstens ungefähr koaxial ist und das angetriebene Element bildet, wobei diese Scheibe einen Antriebsmotor (15) tangiert und von diesem angetrieben wird, dessen Achse (13) mit derjenigen der genannten kreisförmigen Bahn zusammenfällt.

4. Vorrichtung nach einem der vorstehenden Ansprüche, dadurch gekennzeichnet, daß sie einen Arm (34) umfaßt, der an dem Aufbau an einem ersten Punkt seiner Längsausdehnung um eine Achse (13) verschwenkbar gelagert ist, die mit derjenigen der genannten kreisförmigen Bahn zusammenfällt, und daß das genannte angetriebene Element (24, 26) drehbar um eine Achse (31) gelagert ist, die parallel zu der der kreisförmigen Bahn ist und in bezug auf einen zweiten Punkt der Längsausdehnung dieses Armes festliegt, wobei die genannte kreisförmige Bahn durch die Bewegung dieses zweiten Punktes während der Schwingbewegung dieses Armes um seinen ersten Punkt definiert ist.

5. Vorrichtung nach einem der vorstehenden Ansprüche, dadurch gekennzeichnet, daß das angetriebene Element (24, 26) und die Bandantriebsrolle (11) wenigstens ungefähr koaxial sind und drehfest durch eine Verbindung miteinander verbunden sind, welche die Drehbewegung selbst bei Vorhandensein einer Verschiebung zwischen den Achsen des angetriebenen Elements und der Bandantriebsrolle gewährleistet, nach Art einer Oldham-Kupplung.

6. Vorrichtung nach Anspruch 5, dadurch gekennzeichnet, daß die genannte Verbindung durch eine Balgkupplung (43) gebildet ist, welche eine homokinetische Übertragung der Drehbewegung gewährleistet.

7. Vorrichtung nach einem der Ansprüche 1 und 4 bis 6, kombiniert mit Anspruch 3, dadurch gekennzeichnet, daß die genannte angetriebene Scheibe (24) durch ihr Abrollen auf der Antriebsscheibe (25) mechanisch auf ihre Kreisbahn gezwungen ist.

8. Vorrichtung nach einem der Ansprüche 1 und 3 bis 7, dadurch gekennzeichnet, daß die Bandantriebsrolle (11) durch die Anlegkraft, welche der Riemen in Richtung zu den Spulen hin auf sie ausübt, auf ihrer Bewegungsbahn und gegen diese Spulen angelegt gehalten ist.

9. Vorrichtung nach den Ansprüchen 7 und 8, in Kombination betrachtet, dadurch gekennzeichnet, daß die Bandantriebsrolle (11) und die angetriebene Scheibe (24) koaxial und starr miteinander verbunden sind, so daß die angetriebene Scheibe durch ihr Abrollen auf dem Motor und durch die

9

Anlegkraft, welche der Riemen auf die Bandantriebsrolle in Richtung zu den Spulen ausübt, mechanisch auf ihre Kreisbahn gezwungen ist.

10. Vorrichtung nach Anspruch 9, dadurch gekennzeichnet, daß die angetriebene Scheibe und die Antriebsscheibe durch Ritzel gebildet sind.

11. Vorrichtung nach einem der Ansprüche 1, 5, 6 und 8, in Kombination mit Anspruch 4, dadurch gekennzeichnet, daß das genannte angetriebene Element (24) eine Welle ist, die durch einen Motor angetrieben wird, welcher auf dem verschwenkbaren Arm befestigt ist.

12. Vorrichtung nach einem der vorstehenden Ansprüche, dadurch gekennzeichnet, daß der Aufbau (1) eine Platte ist, die eine Wandung eines Gehäuses bildet, welches eine Kassette oder ein Magazin bildet.

13. Vorrichtung nach Anspruch 3 oder 4, in Kombination mit Anspruch 12, dadurch gekennzeichnet, daß die Bandantriebsrolle (11) und die angetriebene Scheibe (24) auf der einen bzw. anderen Seite der genannten Wandung angeordnet und durch eine Welle (26) verbunden sind, die in einem kreisrunden Schlitz bewegbar ist, welcher in dieser Wandung angebracht ist.

# FIG.1A

# FIG.1C

0 055 150

# FIG.1B

FIG. 2A

FIG. 2C

FIG. 2B

0 055 150

FIG. 5

FIG. 3A

FIG. 3B

0 055 150

FIG. 4B

FIG. 4A

FIG. 4C